Europäisches Patentamt

European Patent Office

Office européen des brevets

(19)

(11) Veröffentlichungsnummer: **0 201 003 B1**

(12) **EUROPÄISCHE PATENTSCHRIFT**

(45) Veröffentlichungstag der Patentschrift: **04.03.92**

(51) Int. Cl.⁵: **G02B** 23/08, F41G 3/06, G02B 23/12, G02B 27/64

(21) Anmeldenummer: **86105705.7**

(22) Anmeldetag: **25.04.86**

(54) **Richt- und Beobachtungseinrichtung.**

(30) Priorität: **29.04.85 DE 3515428**

(43) Veröffentlichungstag der Anmeldung:
**17.12.86 Patentblatt 86/46**

(45) Bekanntmachung des Hinweises auf die
Patenterteilung:
**04.03.92 Patentblatt 92/10**

(84) Benannte Vertragsstaaten:
**BE CH DE LI NL**

(56) Entgegenhaltungen:
**FR-A- 2 530 009
FR-A- 2 552 893
GB-A- 2 143 964
US-A- 4 108 551**

(73) Patentinhaber: **SIEMENS AKTIENGESELL-
SCHAFT
Wittelsbacherplatz 2
W-8000 München 2(DE)**

Patentinhaber: **Firma Carl Zeiss
Postfach 1369/1380
W-7082 Oberkochen(DE)**

(72) Erfinder: **Brumme, Gerhard, Dr.
Am Lochfeld 25
W-8088 Eching am Ammersee(DE)**
Erfinder: **Dost, Willibald
Schaffhauser Strasse 22
W-8000 München 71(DE)**
Erfinder: **Grage, Ludger
Frühlingstrasse 46
W-8031 Eichenau(DE)**
Erfinder: **Hüller, Gerhard
Bahnhofstrasse 60a
W-8175 Reichersbeuern(DE)**
Erfinder: **Schwarz, Martin
Am Haselstrauch 3
W-7082 Oberkochen(DE)**
Erfinder: **Stana, Hans
Weingartenstrasse 59
W-7082 Oberkochen(DE)**
Erfinder: **Weinheimer, Hans-Richard, Dr.
Meisenweg 9
W-7923 Königsbronn(DE)**

(74) Vertreter: **Fuchs, Franz-Josef, Dr.-Ing. et al
Postfach 22 13 17
W-8000 München 22(DE)**

EP 0 201 003 B1

**Beschreibung**

Die Erfindung betrifft eine Richt- und Beobachtungseinrichtung, insbesondere für Fahrzeuge, mit einem Rundsichtperiskop mit Vergrößerungswechsel, Laserentfernungsmesser und Nachtbeobachtungsorgan, wobei das Periskop einen Ausblickkopf mit einem einzigen, um eine Elevations- und eine Azimutachse bewegbaren, kreiselstabilisterten Ausblickspiegel, ein Unterteil mit Okular und ein an einer Aufnahme, z.B. an einer Turmdeckplatte eines Fahrzeuges, fest angeordnetes einerseits den Ausblickkopf tragendes und andererseits der Befestigung des Unterteiles dienendes Mittelteil aufweist.

Derartige Einrichtungen werden z.B. bei Panzerfahrzeugen eingesetzt. Die hierfür verwendeten Periskope müssen in neuerer Zeit immer mehr an veränderte Anforderungen anpaßbar, d.h. für Entfernungsmessungen sowie für Tag- und Nachbetrieb verwendbar sein. Diese Forderung nach einer Verbesserung der Einsatzmöglichkeiten solcher Geräte kann durch die Verwendung von Nachtbeobachtungs- und Laserentfernungsmeßgeräten erfüllt werden. Die Kombination bestehender Periskope mit bestehenden Nachtbeobachtungs- und Laserentfernungsmeßgeräten und die Integration derartiger Beobachtungseinrichtungen in ein aufnehmendes System, z.B. in ein bestehendes Waffensystem, bereitet aber hinsichtlich der Harmonisierung der optischen Systeme dieser Geräte und bezüglich des Einbaus in das aufnehmende System große Schwierigkeiten, da der dort zur Aufnahme der Beobachtungseinrichtung zur Verfügung stehende Raum äußerst begrenzt ist und/oder der Einbau eines erweiterten Periskops Änderungen des aufnehmenden Systems erfordert.

Beobachtungseinrichtungen mit erweiterter Nutzbarkeit sind bereits bekannt. So zeigt die DE-PS 27 45 565 einen elektrooptischen Entfernungsmesser mit Zielfernrohr, das derart in die koaxiale Sende- und Empfangsoptik des Entfernungsmessers integriert ist, daß die optische Achse des Koaxialsystems mit der des Zielfernrohrs zusammenfällt. Diese Anordnung ist hinsichtlich der Justierung der optischen Teilsysteme zweckmäßig. Das bekannte, als Einheit schwenk- bzw. kippbare Gerät umfaßt jedoch keine Möglichkeit zur Nachtbeobachtung.

Aus der DE-PS 27 46 076 ist ein Rundblickperiskop mit umschaltbarer Tagsicht- und Wärmebildoptik bekannt, das einen einzigen, in Elevation und Azimut beweglichen, kreiselstabilisierten Ausblickspiegel und eine koaxiale Anordnung von Tagsicht- und Wärmebildoptik mit verschiedenen Vergrößerungsstufen aufweist. Dieses bekannte Rundblickperiskop besitzt jedoch keine Entfernungsmeßeinrichtung.

Das aus der DE-AS 28 17 237 bekannte Rundsichtperiskop mit einem in Azimut und Elevation beweglichen, kreiselstabilisierten Kopfprisma ist zwar mit einem Laserentfernungsmesser, der koaxial in den Visierstrahlengang mit dem gemeinsamen, feststehenden Objektiv eingekoppelt ist, versehen, besitzt jedoch keine Nachtbeobachtungseinrichtung.

Durch die DE-PS 23 00 466 ist ein mit einem Laserentfernungsmesser kombiniertes Beobachtungsperiskop mit einem in Elevation und Azimut beweglichen Schwenkprisma bekannt, bei dem der Lasersender fest an einem stationären Träger, der Laserempfänger dagegen mitdrehend am drehenden Periskopobjektivgehäuse angeordnet ist und die Einkopplung des seitlich außerhalb des Periskops liegenden Lasersendestrahls mit Hilfe von zwei aufeinander ausgerichteten Umlenkprismen zwischen dem Periskopobjektiv und dem Schwenkprisma erfolgt. Auch dieses bekannte Periskop weist keine Nachtbeobachtungseinrichtung auf.

Schließlich ist aus der DE-OS 26 56 673 ein Beobachtungs- und Zielgerät, insbesondere für Fahrzeuge wie Panzerkampfwagen bekannt, das nach dem Baukastenprinzip aufgebaut und für Tag- und Nachtbeobachtung sowie zur Messung der Entfernung eines Zielobjektes geeignet ist. Hierzu ist das bekannte Gerät mit einem außerhalb des Fahrzeugs befindlichen Panoramazielkopf mit einem einzigen, stabilisierten und in Azimut und Elevation beweglichen Eintrittsspiegel für alle optischen Kanäle und mit einem aus dem Strahlengang schwenkbaren galileischen System zur Vergrößerungsumschaltung sowie einem wenigstens ein Okular aufweisenden, innerhalb des Fahrzeugs befindlichen Beobachtungs- und Zielfernrohr ausgebildet, wobei dieses Fernrohr und der Panoramazielkopf durch einen Periskopring zur Durchführung durch die Fahrzeugwandung miteinander verbunden sind und der Periskopring gegen eine Zwischenmuffe austauschbar ist, die eine Nachtseh- oder Entfernungsmeßeinrichtung oder beide Einrichtungen zugleich umfaßt. Die an die Zwischenmuffe ansetzbare Entfernungsmeßeinrichtung besteht aus einem Laserentfernungsmesser mit Sender, Empfänger und zugeordneten optischen Elementen in einem gemeinsamen Gehäuse. Über diese Einzelobjektive sind der Sende- und der Empfangsstrahl zueinander und zum Visierstrahl parallel versetzt in den Strahlengang eingekoppelt, wobei diese Einkopplung über einen gemeinsamen in der Zwischenmuffe ausschwenkbar angeordneten Spiegel erfolgt. Die Nachtseheinrichtung umfaßt ein Lichtverstärkerelement, welches anstelle des ausschwenkbaren Einkoppelspiegels in den Strahlengang zwischen dem Fernrohr und dem Panoramazielkopf eingeschwenkt und dann teleskopartig ausgefahren werden kann. Für den Fall, daß die Zwischenmuffe zugleich das Lichtverstärkerelement und die Entfernungsmeßeinrichtung umfaßt, ist also der Einkoppelspiegel abwechselnd mit dem Lichtverstärkerelement aus- bzw. einzuschwenken, um diesem Platz zu machen. Bei dem bekannten Gerät kann daher entweder nur eine Entfernungsmessung oder nur eine Nachtbeobachtung mit Hilfe des Lichtverstärkerelementes durchgeführt werden, d.h. Entfernungsmessung und Nachtbeobachtung sind nicht gleichzeitig durchführbar. Außerdem erfordert die Nutzung dieser beiden Einsatzmöglichkeiten ein ständiges abwechselndes Aus- und Einschwenken des Einkoppelspiegels und des Lichtverstärkungselementes. Um die abwechselnden Inbetriebsetzungen des Lichtverstärkerelementes und der Entfernungsmeßeinrichtung zu verwirklichen, sind zusätzlich erforderliche Antriebsorgane in der Zwischenmuffe angebracht. Desgleichen sind weitere Antriebsorgane für das Ausschieben oder Einziehen des Teleskoprohres vorgesehen, das den Lichtverstärker trägt. Das bekannte Gerät ist damit zwar an alle Anforderungen anpaßbar, jedoch nur nach verschiedenen Umrüstungen und den hierbei notwendigen Einstellungen. Dies erfordert trotz baukastenähnlicher Baugruppen einen insbesondere durch die alternierende Nutzung von Entfernungsmessung und Nachtbeobachtung verursachten relativ umständlichen, aufwendigen Aufbau gewisser Baugruppen und kann sich nachteilig auf die Harmonisierung der verschiedenen optischen Systeme auswirken.

Der Erfindung liegt nun die Aufgabe zugrunde, eine Richt- und Beobachtungseinrichtung der eingangs genannten Art zu schaffen, die bei guter Harmonisierung der verschiedenen optischen Systeme eine gleichzeitige Nutzung von Entfernungsmessung und Tag- und/oder Nachtbeobachtungskanal ermöglicht und die trotz dieser erweiterten Einsatzmöglichkeiten einfacher und derart aufgebaut ist, daß sie ohne weiteres in bestehende aufnehmende Systeme integrierbar ist.

Diese Aufgabe wird bei einer Richt- und Beobachtungseinrichtung der eingangs genannten Art gemäß der Erfindung dadurch gelöst, daß das Mittelteil eine in einem Tubus feststehend angeordnete Gerätehauptoptik für die Tag- und Nachtbeobachtung sowie für Laserempfang und zumindest teilweise für den Vergrößerungswechsel enthält, ferner den Antrieb für die Vergrößerungsumschaltung und die Azimutlagerung des Ausblickkopfes mit zugehörigen Teilen, wie z.B. die um $n \times 360°$ drehbare Azimutachse, Antrieb, Schleifringe und Azimut-Winkelgeber, umfaßt; daß das das Okular enthaltende Unterteil zugleich Träger des als selbständiges Wärmebildgerät ausgebildeten Nachtbeobachtungsorgans und des Laserentfernungsmessers ist; daß der in das Unterteil eingekoppelte Strahl eines Lasersenders außeraxial und seitlich an der Gerätehauptoptik vorbei zwischen dem Tubus (30) der feststehend angeordneten Gerätehauptoptik (24) und dem Antrieb für die Azimutlagerung des Mittelteiles in einem eigenen Sendekanal zum Ausblickkopf geführt und über ein um die Elevationsachse schwenkbares Umlenkelement abgestrahlt wird; und daß die optischen Kanäle für Tag- und Nachtbeobachtung sowie für Laserempfang gemeinsam bis zum Unterteil geführt und dort in einzelne Kanäle aufgetrennt sind.

Eine derartige Richt- und Beobachtungseinrichtung ist in modularer Bauweise aus selbständigen Funktionsbaugruppen aufgebaut, wobei die Schnittstellen zwischen den Funktionsbaugruppen in vorteilhafter Weise so gelegt sind, daß die Funktionsbaugruppen leicht prüf- und austauschbar sind. Aufgrund der kompakten Bauweise und der vorteilhaften Aufteilung der selbständigen Funktionsbaugruppen ist die Montage der Richt- und Beobachtungseinrichtung leicht durchzuführen, wobei der Einbau in bestehende aufnehmende Systeme ohne weiteres möglich ist. Dies bedeutet, daß die Richt- und Beobachtungseinrichtung ohne Änderung des zur Verfügung stehenden Aufnahmeraumes, also in den für übliche Tagessichtperiskope vorhandenen Raum, z.B. in den hierfür vorhandenen Ausschnitt oder Durchbruch der Turmdeckplatte eines Fahrzeuges, eingesetzt werden kann.

Weitere Vorteile ergeben sich durch das bei der erfindungsgemäßen Richt- und Beobachtungseinrichtung realisierte gesamte optische Konzept. Die feststehende Gerätehauptoptik ermöglicht ein seitliches Vorbeiführen des Laserstrahles vom Ort des Lasersenders zur Drehachse des Ausblickspiegels. Dadurch werden im Gegensatz zu einer drehenden Hauptoptik, durch die der Laserstrahl geführt werden müßte, größere Abschattungen der Eintrittspupille, Dejustierungen des Laserstrahls durch nicht randlaufende Optik und ein zusätzlicher Aufwand von optischen Komponenten zur Fehlerkompensation vermieden. Außerdem ermöglicht eine Anordnung mit einer feststehenden Gerätehauptoptik ein einfaches Auftrennen des optischen Pfades zwischen Ausblickkopf und dem von Mittelteil und Unterteil gebildeten Grundkörper.

Aufgrund des Aufbaus mit einer feststehenden Gerätehauptoptik können auch die Azimutlagerung des Ausblickkopfes, der Antriebsmotor, die Schleifringe und der Azimut-Winkelgeber zu einer weiteren Funktionseinheit zusammengefaßt werden, die im Mittelteil aufgenommen ist. Auch die Antriebselemente für die Vergrößerungsumschaltung befinden sich im feststehenden Teil der Optik, also im Mittelteil, so daß hierfür notwendige Stromzuführungen über Schleifringe entfallen können. Diese Maßnahmen sind zusammen mit der Anordnung auch des Laser-Entfernungsmessers im nicht drehenden Teil der Einrichtung zudem im Hinblick auf eine Verringerung der Trägheitsmassen in der Azimutachse von besonderem Vorteil.

Das gesamte optische Konzept der erfindungsgemäßen Richt- und Beobachtungseinrichtung mit der zur optischen Achse der Gerätehauptoptik zum Teil parallel versetzten Führung des Lasersendestrahls im Mittelteil und im Ausblickkopf ermöglicht es auch, eine Laserentfernungsmessung sowohl bei Nutzung des Tag- und/oder Nachtbeobachtungskanals als auch bei allen Vergrößerungseinstellungen und bei jeder beliebigen Elevations- und Azimutstellung des Ausblickspiegels durchzuführen. Die erfindungsgemäße Richt- und Beobachtungseinrichtung gestattet somit auch eine gleichzeitige Nutzung von Entfernungsmessung sowie des Tag- und/oder Nachtbeobachtungskanals.

Im Hinblick auf die Harmonisierung der verschiedenen optischen Systeme ist es von besonderem Vorteil, daß für den Tag- und Nachtbeobachtungskanal sowie für den Laserempfang ein einziger gemeinsamer Empfangskanal über eine gemeinsame Geräteoptik vorgesehen ist. Zweckmäßigerweise ist der Laserempfänger in das auf der Basis von gemeinsamen Baugruppen aufgebaute Wärmebildgerät integriert. Dadurch ergeben sich weitere Vorteile. Diese Integration erfordert lediglich relativ geringfügige Anpassungen einzelner Baugruppen des Wärmebildgerätes, um dessen Sensor auch als Sensor für den Laserempfang nutzen zu können. Die Nutzung eines gemeinsamen Empfangskanals für ein Wärmebildgerät und einen Laserentfernungsmesser ist in üblicher Art und Weise realisierbar und z.B. in der DE-PS 30 48 809 oder der Patentanmeldung P 34 08 082.1 beschrieben. Der Aufbau eines Wärmebildgerätes mit den als Common-modules bekanntgewordenen gemeinsamen Baugruppen ist aus der DE-PS 23 32 245 sowie aus der DE-OS 31 37 733 oder der Zeitschrift "Wehrtechnik", Oktober 1980, Seiten 21 bis 23 an sich bekannt. Die Integration des Empfängers eines Laserentfernungsmessers kann in der aus der DE-PS 30 48 809 oder der in der Patentanmeldung P 33 25 483.4 angegebenen Weise realisiert werden.

Bei der erfindungsgemäßen Richt- und Beobachtungseinrichtung ist der im Ausblickkopf angeordnete Ausblickspiegel in seinen mechanischen Abmessungen optimierbar, so daß er mit geringen Trägheitsmassen ausführbar ist und bei vorgegebener Reaktionsgeschwindigkeit des Systems nur kleine Antriebsmomente benötigt. Auf diese Weise wird auch die Trägheitsmasse für die Azimutachse reduziert. Eine in dieser Hinsicht besonders vorteilhafte Richt- und Beobachtungseinrichtung ist so ausgebildet, daß das den Sendestrahl abstrahlende Umlenkelement von einem zusätzlichen, seitlich des Ausblickspiegels starr mit ihm gekoppelten Element gebildet ist.

Ein Ausführungsbeispiel einer erfindungsgemäßen Richt- und Beobachtungseinrichtung ist im folgenden anhand der Zeichnung näher beschrieben.

Die Richt- und Beobachtungseinrichtung ist modular aufgebaut und besteht aus folgenden selbständigen Funktionsbaugruppen:

Einem um n × 360° um die Azimutachse drehbaren Ausblickkopf,

einem an einer Aufnahme, z.B. an einer Turmdeckplatte eines Panzerfahrzeuges, fest angeordneten Mittelteil mit Antriebsblock, das den Ausblickkopf trägt,

einem an dem Mittelteil befestigten Unterteil mit Okularblock,

einem Laserentfernungsmesser, insbesondere mit einem $CO_2$-Laser, sowie

einem Wärmebildgerät, welches auch den Laserempfänger enthält, wobei das Wärmebildgerät und der Laserentfernungsmesser intern auf eine Referenzebene justierte Baugruppen sind, so daß sie ohne Nachjustierung an dem Unterteil befestigt werden können.

Es zeigen in Schnittdarstellungen die

Fig. 1        den Ausblickkopf,

Fig. 2        das Mittelteil (Antriebsblock),

Fig. 3, 4     das Unterteil (Okularblock), sowie

Fig. 5        den optischen Gesamtaufbau perspektivisch in schematischer Darstellung mit den optischen und gerätetechnischen Schnittstellen, die durch dicke strichpunktierte Linien gekennzeichnet sind.

Diese Baugruppen haben nun folgenden Aufbau.

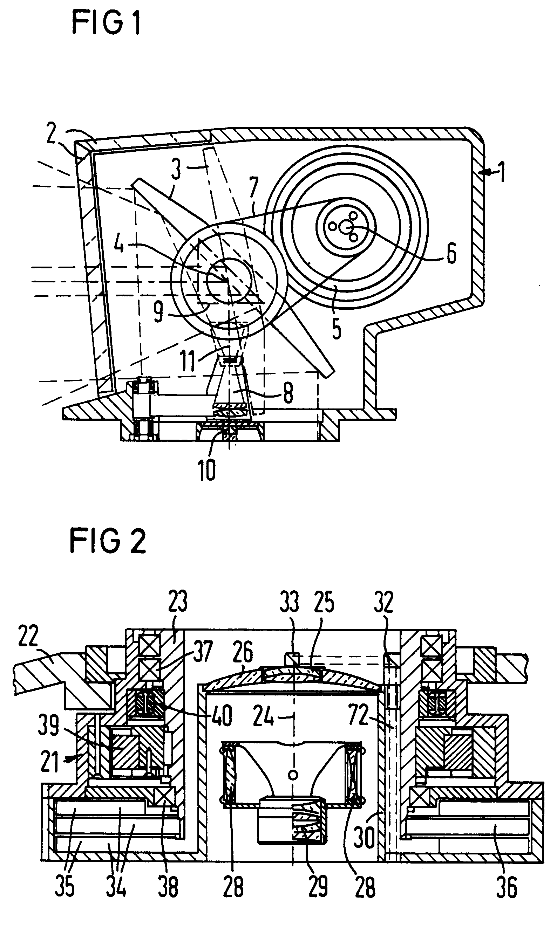

Der Ausblickkopf 1 (Fig. 1) ist mit einem für Tag- und Nachtbeobachtung benützten Abschlußfenster 2 druckdicht abgeschlossen und enthält einen für Tagbeobachtung, Wärmebild und Laserempfänger benützten Ausblickspiegel 3, der mit dem Ausblickkopf um die hier nicht dargestellte, in das Mittelteil ragende Azimutachse drehbar ist und der auf seiner Spiegelachse 4 um die im Ausblickkopf angeordnete Elevationsachse 5 kippbar ist. Zur Stabilisierung des Ausblickspiegels 3 sind auf einer Achse 6 Kreisel angeordnet. Die Verbindung zwischen der Kreiselachse 6 und der Spiegelachse 4 kann über ein Bandgetriebe 7 erfolgen. Für den Antrieb kann ein Torquer-Motor vorgesehen werden. Im unteren Teil des Ausblickkopfes 1 ist eine Sehfeldumschaltoptik 8 für Tagbild untergebracht. Für den Lasersendestrahlengang befinden sich außer einem seitlich fest am Ausblickspiegel bzw. dessen Achse angeordneten Elevationsprisma 9 noch weitere optische Elemente, wie z.B. ein Teilerwürfel 1O und ein Galilei-Fernrohr 11 sowie ein nicht dargestelltes 90°-Umlenkprisma innerhalb des Ausblickkopfes.

Das Mittelteil 21 (Fig. 2), welches die Gerätehauptoptik 24 sowie den Antriebsblock enthält, ist gleichzeitig die Schnittstelle zur Aufnahme, d.h. es stellt die Verbindung des Gerätes z.B. zu einer Turmdeckplatte 22 her. Es ragt gerade soweit durch die Turmdeckplatte, daß der Ausblickkopf an der innerhalb des Mittelteils um n × 360° drehbar angeordneten Azimutachse 23 befestigt werden kann. Die Gerätehauptoptik 24 ist feststehend, also nicht drehbar, in einem Tubus 30 angeordnet und besteht in ihrem vorderen Teil aus einem ersten Vorderglied 26 für Tagbild, das in der Mitte mit einer Bohrung zur Aufnahme eines zweiten Vordergliedes 25 ausgebildet ist, sowie aus zwei abwechselnd gegeneinander in den optischen Strahlengang ein- und ausschwenkbaren Hintergliedern 28 und 29, mit denen sowohl für Tag- als auch für Wärmebild der Vergrößerungswechsel durchgeführt wird. Hierbei sind die Hinterglieder 28 und 29 von optischen Breitbandsystemen gebildet, die für einen weiten Spektralbereich von z.B. 0,4 ... 14 μm transparent und mindestens in den Wellenlängenbereichen der sogenannten atmosphärischen Fenster auch korrigiert sind. Der in das Unterteil eingekoppelte Strahl 72 des Lasersenders ist außeraxial zwischen dem feststehenden Objektivtubus 30 und der drehbaren Azimutachse 23 nach oben geführt, d.h. parallel zur optischen Achse der Gerätehauptoptik 24 versetzt und seitlich an dieser vorbei nach oben geführt, wo er über ein 90°-Prisma 32 und einen für Tagsicht durchlässigen und Laserstrahlung reflektierenden Teilerwürfel 33 in die optische Achse der Gerätehauptoptik 24 nach oben zum Ausblickspiegel 3 abgelenkt wird. Durch diese Art der Lasersendestrahlführung im Mittelteil und im Ausblickkopf kann eine Laserentfernungsmessung bei allen Vergrößerungen für Tag- und Nachtbeobachtung und bei jeder beliebigen Elevations- und Azimutstellung durchgeführt werden. Ein weiterer Vorteil der feststehenden Gerätehauptoptik liegt darin, daß auch der Antriebsmechanismus für die Vergrößerungsumschaltung ebenfalls fest im Objektivtubus 30 angeordnet werden kann. Die elektrische Verbindung zwischen dem feststehenden Teil der Azimutlagerung und der drehbaren Azimutachse 23 wird mit einem beidseitigen Tellerschleifring 34 hergestellt. Die beiden Bürstenpakete 35 sind am feststehenden Teil der Azimutlagerung und der Schleifringkörper 36 ist an der drehbaren Azimutachse 23 befestigt. Mit 37 und 38 sind zwei Lager für die Azimutachse bezeichnet. Der Antrieb erfolgt über einen Torquer-Motor 39. Lager und Motor können wegen der verringerten Antriebsmassen kompakt, d.h. klein ausgeführt werden. Die Winkelstellung wird mit einem Azimut-Winkelgeber 40 ermittelt. Aufgrund dieses Aufbaus mit feststehender Gerätehauptoptik können Azimutlagerung des Ausblickkopfes, Torquer-Motor, Schleifringe und Azimut-Winkelgeber zu einer Funktionseinheit mit geringer Trägheitsmasse der rotierenden Teile zusammengefaßt werden.

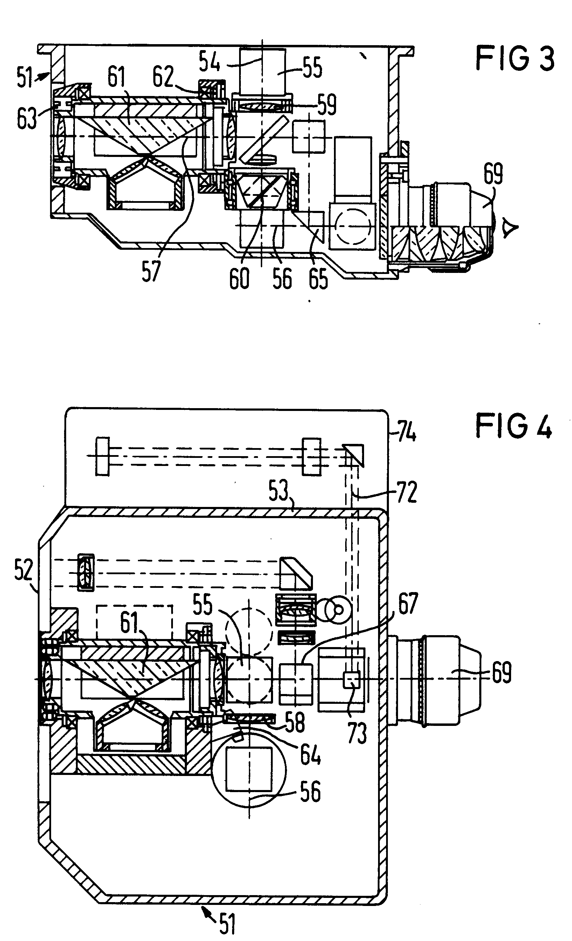

Das Unterteil 51 (Fig. 3, 4) mit Okularblock ist am Mittelteil befestigt und schließt dieses nach unten ab. Es ist gleichzeitig Schnittstelle für das hier nicht dargestellte Wärmebildgerät und den Lasersender 74, die an zwei benachbarten Seitenflächen 52 bzw. 53 des Unterteils 51 befestigt werden. Der gemeinsame Strahlengang 54 für Tag- und Wärmebild wird durch einen Spektralteiler 55 in den Tagstrahlengang 56 und den Wärmestrahlengang 57 aufgespalten. Der in das Unterteil eingekoppelte Lasersendestrahl 72 wird durch ein 90°-Prisma 73 nach oben in das Mittelteil abgelenkt. In der Objektivbildebene liegen Feldlinsen 58, 59 für Tag- bzw. Wärmebild, die bei einer Vergrößerungsumschaltung durch Verschieben jeweils gewechselt werden. Zur Kompensation von Azimut- und Rollbewegungen der Richt- und Beobachtungseinrichtung sind Aufrichtprismen 60, 61 für Tag- bzw. Wärmebild vorgesehen. Der Antrieb erfolgt durch einen Torquer-Motor 62, die Winkelstellung wird durch einen Resolver 63 sensiert. Diese beiden Elemente sind an dem Aufrichtprisma 61 für Wärmebild angebracht, wobei die Kopplung mit dem Aufrichtprisma 60 für Tagbild über einen Kegelantrieb 64 erfolgt. Bei der Umschaltung von Tag- auf Nachtbeobachtung wird ein 90°-Prisma 65 eingeschwenkt. Der Tagstrahlengang 56 und die Wärmebildwiedergabe 67 werden mit dem Okular 69 betrachtet.

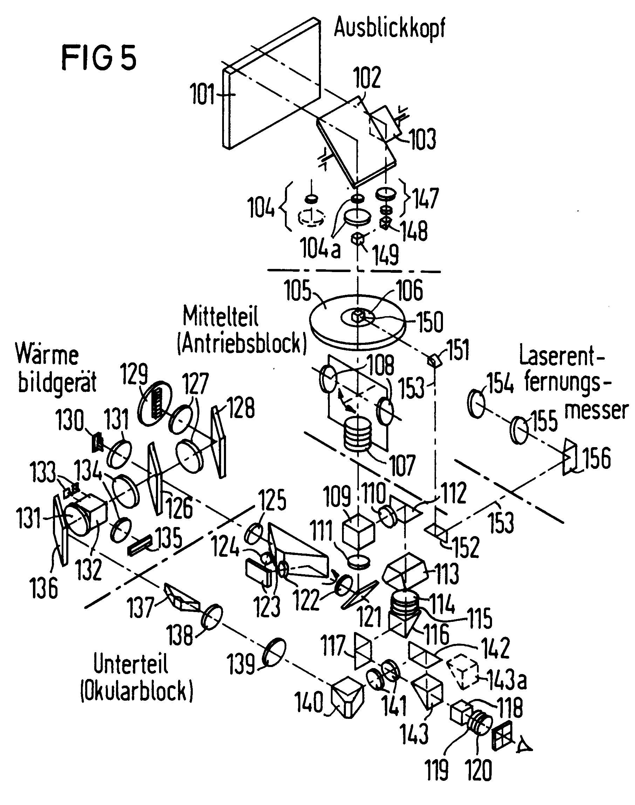

Weitere Funktionsbaugruppen der Richt- und Beobachtungseinrichtung sind das Wärmebildgerät und der Laserentfernungsmesser. Das Wärmebildgerät ist auf der Basis von gemeinsamen Baugruppen, sogenannten Common-modules, aufgebaut und bildet außer seiner Funktion als Nachtziel- und Beobachtungsgerät auch die Basis für weitere Systemfunktionen, insbesondere den Sensor für einen in das Wärmebildgerät integrierten Laserempfänger. Hierbei können für den Laserempfänger bestimmte, für das Wärmebildgerät ohnehin erforderliche Baugruppen mitbenutzt werden. Die über die eigentliche Funktion eines Wärmebildgerätes hinausgehenden Forderungen bedingen zwar gewisse Modifikationen einzelner Komponenten, insbesondere des Detektors und des Wiedergabesystems für das Wärmebild, die Integration des Empfängers eines Laserentfernungsmessers in ein bestehendes Wärmebildgerät kann jedoch ohne allzu großen Eingriff in ein nach dem Standard-Common-Modul-Konzept aufgebautes Wärmebildgerät und in an sich bekannter Weise durchgeführt werden. Der nähere Aufbau eines für die erfindungsgemäße Richt- und Beobachtungseinrichtung einsetzbaren Wärmebildgerätes mit integriertem Empfänger für Laserentfernungsmessung braucht daher an dieser Stelle nicht näher erläutert zu werden. Es sei lediglich erwähnt, daß das Wärmebildgerät im Spektral-bereich von 8 ... 14 μm, d.h. in dem sogenannten zweiten atmosphärischen Fenster arbeitet, in dem auch der vorzugsweise für den Laserentfernungs-messer verwendete $CO_2$-Laser emittiert. Im übrigen ergeben sich Aufbau und Wirkungsweise des Wärmebildgerätes und des Laserempfängers aus dem im folgenden anhand der Fig. 5 näher beschriebenen optischen Gesamtaufbau der Richt-und Beobachtungseinrichtung.

Der optische Gesamtaufbau der Richt- und Beobachtungseinrichtung ist so gewählt, daß für Tag- und Nachtbeobachtung bzw. Wärmebild sowie für Laserempfang ein gemeinsamer Empfangskanal mit einer gemeinsamen feststehenden Gerätehauptoptik und mit Vergrößerungswechsel sowohl bei Tag- als auch bei Nachtbeobachtung vorgesehen sowie eine gleichzeitige Nutzung von Tag-und/oder Nachtbeobachtungskanal und Laserentfernungsmessung möglich ist.

Im folgenden ist die Tagesoptik erläutert.

Die von einer Szene ausgehenden Strahlen durchdringen das Abschlußfenster 101 des Ausblickkopfes und werden von dem in Elevation und Azimut beweglichen Ausblickspiegel 102 lotrecht in das Objektiv-Vorderglied 106 und das Breitband-Objektiv-Hinterglied 107 abgelenkt. Die Strahlen werden dann von einem Spektralteiler 109 um 90° abgelenkt und erzeugen in der Bildebene mit Feldlinse 110 ein Zwischenbild. Die Strahlen treffen sodann nach erneuter Ablenkung durch ein 90°-Prisma 112 auf ein Bildaufrichteprisma 113 zur Korrektur des Bildsturzes bei Azimutdrehung des Ausblickspiegels 102. Ein Umkehrsystem 114 mit einem fest eingebauten Laser-Schutzfilter 115 erzeugt, abgelenkt durch zwei 90°-Prismen 116 und 117, ein Bild in der Okularbildebene, welches mit einem Okular 120 betrachtet wird. Wahlweise kann in den Strahlengang ein Sonnenschutzfilter 119 eingeschaltet werden. Zur Erzeugung eines Bildes mit anderer Vergrößerung und anderem Sehfeld wird das Breitbandsystem 107 aus- und das Breitbandsystem 108 eingeschaltet. Zum weiteren Vergröße-rungswechsel wird die Sehfeldumschaltoptik 104 in die Position 104a geschaltet.

Im Wärmebildkanal durchdringen die von der Szene ausgehenden IR-Strahlen das Abschlußfenster 101 und werden von dem in Elevation und Azimut beweglichen Ausblickspiegel 102 lotrecht in das Breitband-Objektiv 105, 107 abgelenkt. Die Strahlen durchdringen den Spektralteiler 109 und erzeugen in der Bildebene mit Feldlinse 111 ein Zwischenbild. Die mittels Umlenkspiegel 121 um 90° abgelenkten IR-Strahlen erzeugen mit einem IR-Umkehrsystem 122 in der Bildebene mit Feldlinse 124 ein Zwischenbild. Zur Korrektur des Bildsturzes bei Azimutdrehung des Ausblickspiegels 102 durchsetzen die Strahlen das Spiegelsystem 123 zur kontinuierlichen Bildaufrichtung mit erhöhtem Lichtleitwert. Sie durchdringen das Umkehrsystem 125 und gelangen als Parallel-Strahlenbündel auf einen Scanspiegel 126. Dieser lenkt die Strahlen zu einem IR-Abbildungsobjektiv 127. Über einen Umlenkspiegel 128 erfolgt die Abbildung auf dem Detektor-Array 129 des Wärmebildgerätes. Zur Erzeugung eines Bildes mit anderer Vergrößerung und anderem Sehfeld wird das Breitbandsystem 107 aus- und das Breitbandsystem 108 eingeschaltet.

Im folgenden ist die Wärmebildwiedergabe erläutert.

Die Strahlung eines vom Detektor-Array 129 angesteuerten Leuchtdioden-(LED)-Arrays 130 wird mit Hilfe eines visuellen Kollimatorobjektives 131 über die Rückseite des Scanspiegels 126 ins Unendliche projiziert, von einem Umlenkspiegel 136 um 90° abgelenkt und von einem Dove-Prisma 137 aufgerichtet. Über ein optisches System 138, 139 und 141 wird die vom LED-Array 130 wiedergegebene Szene über Umlenkelemente 140, 142 und 143 in die Okularbildebene übertragen und mit dem Okular 120 betrachtet. Bei Umschaltung von Wärmebild auf Tagbild wird das 90°-Prisma 143 in die Position 143a geschaltet. Eine Zielmarke 133 kann mittels eines Teilerwürfels 132 in den Wärmebildwiedergabekanal eingespiegelt werden.

Die Strahlung, die aus dem Lasersender mit dem vollreflektierenden Spiegel 154 und dem Auskoppelspiegel 155 austritt und über ein 90°-Prisma 152 in das Unterteil 51 eingekoppelt wird, gelangt im Laser-Sendekanal 153 über die gerätefesten 90°-Prismen 152 und 151 sowie den gerätefesten, für Tagsicht durchlässigen Teilerwürfel 150 in das Mittelteil und den Ausblickkopf. Dort wird der Strahl über starr im drehenden Ausblickkopf angeordnete, als für Tagsicht durchlässiger Teilerwürfel 149 und als 90°-Prisma 148 ausgebildete Umlenkelemente in das Galilei-Fernrohr 147 abgelenkt, welches als Sendeteleskop für den Sendestrahl dient und diesen aufweitet. Die Laserstrahlung durchdringt das in Elevation und Azimut bewegliche Ausblickprisma 103, das Abschlußfenster 101 und gelangt zum Ziel. Die am Ziel diffus remittierte Laserstrahlung wird mit Hilfe des Wärmebildkanals auf ein zusätzliches Element im Detektor-Array 129 abgebildet und sensiert. Eine derartige Anordnung ist z.B. in der Patentanmeldung P 33 25 483.4 angegeben.

Die Anordung eines Scanspiegels vor dem Detektor des Laserempfängers hat zur Folge, daß der Detektor nicht zu jedem Zeitpunkt den vom Lasersender beleuchteten Zielfleck "sieht". Es ist daher die Triggerung des Lasers sorgfältig mit der Scanspiegelbewegung zu synchronisieren. Hierzu ist ein als Scan-Position-Sensor bekannt gewordener Abtast-Positions-Fühler 135 vorgesehen.

Die Richt- und Beobachtungseinrichtung ist insbesondere im Hinblick auf die Sensoren so aufgebaut, daß sie auch noch um die zusätzliche Funktion einer Zielverfolgung erweiterbar ist.

**Patentansprüche**

1. Richt- und Beobachtungseinrichtung, insbesondere für Fahrzeuge, mit einem Rundisichtperiskop mit Vergrößerungswechsel (28, 29), Laserentfernungsmesser (74, 129) und Nachtbeobachtungsorgan (122-140), wobei das Periskop einen Ausblickkopf (1) mit einem einzigen, um eine Elevations- und eine Azimutachse bewegbaren, kreiselstabilisierten Ausblickspiegel (3,102), ein Unterteil (51) mit Okular und ein an einer Aufnahme, z.B. an einer Turmdeckplatte (22) eines Fahrzeuges, fest angeordnetes einerseits den Ausblickkopf (1) tragendes und andererseits der Befestigung des Unterteiles (51) dienendes Mittelteil (21) aufweist, **dadurch gekennzeichnet,** daß das Mittelteil (21) eine in einem Tubus (30) feststehend angeordnete Gerätehauptoptik (24) für die Tag- und Nachtbeobachtung sowie für Laserempfang und zumindest teilweise für den Vergrößerungswechsel enthält, ferner den Antrieb für die Vergrößerungsumschaltung und die Azimutlagerung des Ausblickkopfes (1) mit zugehörigen Teilen, wie z.B. die um n x 360° drehbare Azimutachse (23), Antrieb, Schleifringe (34-36) und Azimut-Winkelgeber (40), umfaßt; daß das das Okular (69) enthaltende Unterteil (51) zugleich Träger des als selbständiges Wärmebildgerät ausgebildeten Nachtbeobachtungsorgans und des Laserentfernungsmessers ist; daß der in das Unterteil (51) eingekoppelte Strahl (72) eines Lasersenders außeraxial und seitlich an der Gerätehauptoptik (24) vorbei zwischen dem Tubus (30) der feststehend angeordneten Gerätehauptoptik (24) und dem Antrieb für die Azimutlagerung (23) des Mittelteiles (21) in einem eigenen Sendekanal (31) zum Ausblickkopf geführt und über ein um die Elevationsachse schwenkbares Umlenkelement (3, 9) abgestrahlt wird; und daß die optischen Kanäle für Tag- und Nachtbeobachtung sowie für Laserempfang gemeinsam bis zum Unterteil (51) geführt und dort in einzelne Kanäle aufgetrennt sind.

2. Richt- und Beobachtungseinrichtung nach Anspruch 1, **dadurch gekennzeichnet,** daß der Sendestrahl (72, 153) über gerätefeste Umlenkelemente (151, 150) in die optische Achse der Gerätehauptoptik (24) eingekoppelt ist.

3. Richt- und Beobachtungseinrichtung nach Anspruch 2, **dadurch gekennzeichnet,** daß der Sendestrahl (72, 153) über starr im Ausblickkopf (1) angeordnete Umlenkelemente (149, 148) aus der optischen Achse der Gerätehauptoptik (24) ausgekoppelt und parallel versetzt weitergeführt ist.

4. Richt- und Beobachtungseinrichtung nach einem der Ansprüche 1 bis 3, **dadurch gekennzeichnet,** daß das den Sendestrahl (72, 153) abstrahlende Umlenkelement von dem Ausblickspiegel (3, 102) selbst gebildet ist.

5. Richt- und Beobachtungseinrichtung nach einem der Ansprüche 1 bis 3, **dadurch gekennzeichnet,** daß das den Sendestrahl (72, 153) abstrahlende Umlenkelement von einem zusätzlichen, seitlich des Ausblickspiegels (3, 102) starr mit ihm gekoppelten Element (9, 103) gebildet ist.

6. Richt- und Beobachtungseinrichtung nach einem der vorhergehenden Ansprüche, **dadurch gekennzeichnet,** daß der Sendestrahl (72, 153) unaufgeweitet bis zum Ausblickkopf (1) geführt und dort durch ein Sendeteleskop (11) aufgeweitet ist.

7. Richt- und Beobachtungseinrichtung nach Anspruch 6, **dadurch gekennzeichnet,** daß das Sendeteleskop (11) in Abstrahlrichtung vor dem den Sendestrahl (72, 153) abstrahlenden Umlenkelement (3, 9, 102, 103) angeordnet ist.

8. Richt- und Beobachtungseinrichtung nach einem der vorhergehenden Ansprüche, **dadurch gekennzeichnet,** daß der Laserempfänger in das auf der Basis von gemeinsamen Baugruppen aufgebaute Wärmebildgerät integriert ist.

9. Richt- und Beobachtungseinrichtung nach einem der Ansprüche 1 bis 8, **dadurch gekennzeichnet,** daß der Laserentfernungsmesser im gleichen Spektralbereich wie das Wärmebildgerät arbeitet.

10. Richt- und Beobachtungseinrichtung nach einem der vorhergehenden Ansprüche, **dadurch gekennzeichnet,** daß der Laserentfernungsmesser einen im augenunschädlichen Bereich arbeitenden Sender enthält.

11. Richt- und Beobachtungseinrichtung nach Anspruch 10, **dadurch gekennzeichnet,** daß der Laserentfernungsmesser als Sender einen C O$_2$-Laser enthält.

12. Richt- und Beobachtungseinrichtung nach einem der Ansprüche 1 bis 8, **dadurch gekenn-**

zeichnet, daß der Laserentfernungsmesser im Durchlaßbereich des Empfangskanals für Tagbeobachtung arbeitet.

13. Richt- und Beobachtungseinrichtung nach Anspruch 12, **dadurch gekennzeichnet,** daß der Laserentfernungsmesser als Sender einen YAG:Nd-Laser enthält.

14. Richt- und Beobachtungseinrichtung nach einem der vorhergehenden Ansprüche, **dadurch gekennzeichnet,** daß die Gerätehauptoptik (24) aus je einem Vorderglied (26, 25) für Tagbild bzw. für Wärmebild und aus mindestens einem Breitbandsystem (28, 29) als Hinterglied besteht.

15. Richt- und Beobachtungseinrichtung nach Anspruch 14, **dadurch gekennzeichnet,** daß das erste Vorderglied (26) der Gerätehauptoptik (24) in der Mitte mit einer Bohrung für das zweite Vorderglied (25) ausgebildet ist.

16. Richt- und Beobachtungseinrichtung nach Anspruch 14 oder 15, **dadurch gekennzeichnet,** daß das Hinterglied aus mindestens zwei Breitbandsystemen (28, 29) unterschiedlicher Vergrößerung besteht, die abwechselnd gegeneinander in den optischen Strahlengang ein- und ausschwenkbar sind.

17. Richt- und Beobachtungseinrichtung nach einem der vorhergehenden Ansprüche, **dadurch gekennzeichnet,** daß im Ausblickkopf (1) eine in den optischen Strahlengang ein- und ausschwenkbare Sehfeldumschaltoptik (8) für Tagbild angeordnet ist.

18. Richt- und Beobachtungseinrichtung nach einem der vorhergehenden Ansprüche, **dadurch gekennzeichnet,** daß das Wärmebildgerät und der Laserentfernungsmesser intern auf eine Referenzebene justiert sind.

## Claims

1. Sighting and observation device, preferably for vehicles, having a surveillance periscope with variable magnification (28, 29), a laser rangefinder (74, 129) and a night observation device (122-140), the periscope having a reflector head (1) with a single gyro-stabilised reflector (3, 102) which is movable about an elevation axis and an azimuth axis, a lower part (51) with an eyepiece and a centre part (21) which is arranged fixedly on a mounting, for example a turret roof plate (22) of a vehicle and is used on the one hand to support the reflector head (1) and on the other hand for attachment of the lower part (51), characterised in that the centre part (21) contains a main equipment optical system (24), fixedly arranged in a tube (30), for day and night observation and for laser reception and at least partially for varying the magnification, and furthermore comprises the drive for changing the magnification, and the azimuth bearing of the reflector head (1) with the associated parts, such as, for example, the azimuth shaft (23), which is rotatable through n x 360°, drive, slip rings (34-36) and azimuth angle sensor (40); in that the lower part (51) containing the eyepiece (69) is at the same time the support for the night observation device, designed as an independent thermal imaging equipment, and for the laser rangefinder; in that the beam (72) of a laser transmitter coupled into the lower part (51) is directed to the reflector head in a discrete transmission channel (31), eccentrically and laterally past the main equipment optical system (24), between the tube (30) of the fixedly arranged main equipment optical system (24) and the drive for the azimuth bearing (23) of the centre part (21), and is emitted via a deflector element (3, 9) which can be pivoted about the elevation axis; and in that the optical channels for day and night observation and for laser reception are directed jointly to the lower part (51) where they are separated into individual channels.

2. Sighting and observation device according to Claim 1, characterised in that the transmission beam (72, 153) is coupled into the optical axis of the main equipment optical system (24) via deflector elements (151, 150) fixed to the equipment.

3. Sighting and observation device according to Claim 2, characterised in that the transmission beam (72, 153) is coupled out of the optical axis of the main equipment optical system (24) via deflector elements (149, 148) arranged rigidly in the reflector head (1) and is further directed offset in parallel.

4. Sighting and observation device according to one of Claims 1 to 3, characterised in that the deflector element emitting the transmission beam (72, 153) is itself formed by the reflector (3, 102).

5. Sighting and observation device according to one of Claims 1 to 3, characterised in that the deflector element emitting the transmission beam (72, 153) is formed by an additional element (9, 103) on the side of the reflector (3, 102) and rigidly coupled thereto.

6. Sighting and observation device according to one of the preceding claims, characterised in that the transmission beam (72, 153) is directed without expansion to the reflector head (1) where it is expanded by a transmission telescope (11).

7. Sighting and observation device according to Claim 6, characterised in that the transmission telescope (11) is arranged in the direction of emission in front of the deflector element (3, 9, 102, 103) emitting the transmission beam (72, 153).

8. Sighting and observation device according to one of the preceding claims, characterised in that the laser receiver is integrated into the thermal imaging equipment, which is constructed on the basis of common modules.

9. Sighting and observation device according to one of Claims 1 to 8, characterised in that the laser range-finder operates in the same spectral band as the thermal imaging equipment.

10. Sighting and observation device according to one of the preceding claims, characterised in that the laser rangefinder contains a transmitter operating in a band which is not hazardous to the eyes.

11. Sighting and observation device according to Claim 10, characterised in that the laser rangefinder contains a $CO_2$ laser as a transmitter.

12. Sighting and observation device according to one of Claims 1 to 8, characterised in that the laser range-finder operates in the passband of the reception channel for day observation.

13. Sighting and observation device according to Claim 12, characterised in that the laser rangefinder contains a YAG:Nd laser as a transmitter.

14. Sighting and observation device according to one of the preceding claims, characterised in that the main equipment optical system (24) consists of in each case a front member (26, 25) for daylight imaging or for thermal imaging, and of at least one broadband system (28, 29) as a rear member.

15. Sighting and observation device according to Claim 14, characterised in that the first front member (26) of the main equipment optical system (24) is designed with a hole in the centre for the second front member (25).

16. Sighting and observation device according to Claim 14 or 15, characterised in that the rear member consists of at least two broadband systems (28, 29) of different magnification, which can be alternately swivelled into and out of the optical beam path in antiphase.

17. Sighting and observation device according to one of the preceding claims, characterised in that a field-of-view changing optical system (8) for daylight imaging, which can be swivelled into and out of the optical beam path, is arranged in the reflector head (1).

18. Sighting and observation device according to one of the preceding claims, characterised in that the thermal imaging equipment and the laser rangefinder are adjusted internally on a reference plane.

**Revendications**

1. Dispositif de pointage et d'observation, notamment pour des véhicules, comportant un périscope omnidirectionnel équipé d'un système de changement de grossissement (28,29), un télémètre laser (74,129) et un élément d'observation nocturne (122-140), le périscope comportant une tête unique de visée (3,102) déplaçable autour d'un axe d'élévation et d'un axe azimutal et gyrostabilisée, une partie inférieure (51) comportant un oculaire et une partie médiane (22) montée fixe sur un support, par exemple sur une plaque de fermeture (22) de tourelle d'un véhicule et qui, d'une part, porte la tête de visée (1) et, d'autre part, sert à fixer la partie inférieure (51), caractérisé par le fait que la partie médiane (21) contient un dispositif optique principal d'appareil (24) monté fixe sur un tube (30) pour l'observation diurne et nocturne ainsi que pour la réception laser et au moins en partie pour un changement de grossissement, et comporte en outre le dispositif d'entraînement du circuit de changement de grossissement et le dispositif de support en azimut de la tête de visée (1), équipé des parties associées, comme par exemple l'axe azimutal (23) pouvant tourner sur n x 360°, un dispositif d'entraînement, des bagues coulissantes (34-36) et un capteur (40) de l'angle azimutal; que la partie inférieure (51), qui contient l'oculaire (69), constitue simultanément le support de l'élément d'observation nocturne réalisé sous la forme d'un dispositif indépendant de formation d'images thermiques, et du télémètre laser; que le rayonnement (72), injecté dans la partie inférieure (51), d'un émetteur laser est guidé en dehors de l'axe, de manière A passer latéralement devant le dispositif optique principal d'appareil (24) entre le tube (30) du dispositif optique principal fixe (24) et le dispositif d'entraînement prévu pour le dispositif de support en azimut (23) de la partie médiane (21), dans un canal particulier d'émission (32) en direction de la tête de visée et est émis par l'intermédiaire d'un élément de renvoi (3,9) pouvant pivoter autour de l'axe d'élévation; et que les canaux optiques pour l'observation diurne et l'observation nocture ainsi que pour la réception laser sont guidés en commun jusqu'à la partie inférieure (51) et se séparent en cet endroit en des canaux différents.

2. Dispositif de pointage et d'observation suivant la revendication 1, caractérisé par le fait que le rayonnement d'émission (72,153) est injecté par couplage sur l'axe optique du dispositif optique principal d'appareil (24), par l'intermédiaire d'éléments de renvoi (151,150) fixés à l'appareil.

3. Dispositif de pointage et d'observation suivant la revendication 2, caractérisé par le fait que le rayonnement d'émission (72,153) est découplé de l'axe optique du dispositif optique principal d'appareil (24) par l'intermédiaire d'éléments de renvoi (149,148) montés de façon fixe dans la tête de visée (1) et se déplace ensuite en étant décalé parallèlement.

4. Dispositif de pointage et d'observation suivant les revendications 1 à 3, caractérisé par le fait que l'élément de renvoi, qui émet le rayonnement d'émission (72,153), est formé par le miroir de visée (3,102).

5. Dispositif de pointage et d'observation suivant l'une des revendications 1 à 3, caractérisé par le fait que l'élément de renvoi, qui émet le rayonnement d'émission (72,153), est formé par un élément supplémentaire (9,103) accouplé rigidement au miroir de visée (3,102), latéralement par rapport à ce dernier.

6. Dispositif de pointage et d'observation suivant l'une des revendications précédentes, caractérisé par le fait que le rayonnement d'émission (72,153) est guidé sans élargissement jusqu'à la tête de visée (1) et y est élargi au moyen d'une lunette d'émission (11).

7. Dispositif de pointage et d'observation suivant la revendication 6, caractérisé par le fait que la lunette d'émission (11) est disposée, dans la direction d'émission, en amont de l'élément de renvoi (3,9,102,103) qui émet le rayonnement d'émission (72,153).

8. Dispositif de pointage et d'observation suivant l'une des revendications précédentes, caractérisé par le fait que le récepteur laser est intégré dans l'appareil de formation d'images thermiques constitué sur la base de modules communs.

9. Dispositif de pointage et d'observation suivant l'une des revendications 1 à 8, caractérisé par le fait que le télémètre laser opère dans la même plage spectrale que l'appareil de formation d'images thermiques.

10. Dispositif de pointage et d'observation suivant l'une des revendications précédentes, caractérisé par le fait que le télémètre laser cmporte un émetteur qui opère dans la gamme non nuisible pour l'oeil.

11. Dispositif de pointage et d'observation suivant la revendication 10, caractérisé par le fait que le télémètre laser comporte, en tant qu'émetteur, un laser au $CO_2$.

12. Dispositif de pointage et d'observation suivant l'une des revendications 1 à 8, caractérisé par le fait que le télémètre laser opère dans la plage de transmission du canal de réception pour l'observation diurne.

13. Dispositif de pointage et d'observation suivant la revendication 12, caractérisé par le fait que le télémètre laser comporte, en tant qu'émetteur, un laser YAG:Nd.

14. Dispositif de pointage et d'observation suivant l'une des revendications précédentes, caractérisé par le fait que le dispositif optique principal d'appareil (24) est constitué respectivement par un élément avant (26,25) pour la lumière diurne ou pour l'image thermique et par au moins un système à large bande (28,29) en tant qu'élément arrière.

15. Dispositif de pointage et d'observation suivant la revendication 14, caractérisé par le fait que le premier élément avant (26) du dispositif optique principal d'appareil (24) comporte, en son centre, un perçage pour le second élément avant (25).

**16.** Dispositif de pointage et d'observation suivant la revendication 14 ou 15, caractérisé par le fait que l'élément arrière est constitué d'au moins deux systèmes à large bande (28,29) présentant des grossissements différents et qui peuvent être amenés par pivotement, d'une manière alternée et l'un par rapport à l'autre, dans et hors du trajet du rayonnement optique.

**17.** Dispositif de pointage et d'observation suivant l'une des revendications précédentes, caractérisé par le fait qu'un dispositif optique (8) de commutation du champ visuel, qui peut être amené par pivotement dans et hors du trajet du rayonnement optique, pour la lumière diurne, est disposé dans la tête de visée (1).

**18.** Dispositif de pointage et d'observation suivant l'une des revendications précédentes, caractérisé par le fait que l'appareil de formation d'images thermiques et le télémètre laser sont ajustés de façon interne sur un plan de référence.

FIG 1

FIG 2

FIG 3

FIG 4

FIG 5

Ausblickkopf

101 102 103

104 { 147
104a 148
149

105 106 150
Mittelteil
(Antriebsblock) 151

Wärme
bildgerät 129 127 108 153 Laserent-
130 131 128 154 fernungs-
133 134 126 107 155 messer
131 135 156
132 109 110 112
136 125 111 153
124 113 152
137 123 122 121 114 115
138 117 116 142
Unterteil 139 143a
(Okularblock) 140 141 118
143 119 120